# EUROPEAN PATENT APPLICATION

(11) **EP 4 628 246 A1**
(43) Date of publication of application: **08.10.2025**
(21) Application number: 22967299.3
(22) Date of filing: 01.12.2022
(51) Int. Cl.: B23K 31/12, B23K 35/30, B23K 35/36, B25J 11/00, B25J 9/16, B23K 101/26

(54) **SMART WELDING SYSTEM FOR RECONDITIONING OLD RAILWAY WHEELS**

(71) Applicant: Asiatech Co., Ltd, Jecheon-si, Chungcheongbuk-do 27159 (KR)
(72) Inventor: LEE, Young Jin, Jecheon-si, Chungcheongbuk-do 27162 (KR)
(74) Representative: Samson & Partner Patentanwälte mbB
(86) International application number: PCT/KR2022/019394
(87) International publication number: WO 2024/117324

(57) **Abstract**

The present invention relates to a smart welding system for reconditioning old railway wheels, wherein the smart welding system operates a welding robot according to a program while uniformly maintaining the supply speed of a welding member and the rotation speed of a wheel axis and monitors various types of data generated during welding to correct defects during welding, thereby improving welding performance. According to the smart welding system for reconditioning old railway wheels of the present invention, by automatically performing welding work according to a program and monitoring various types of data generated during welding to correct defects during welding, flawless welding quality can be ensured. In addition, by changing the composition of the welding member, the steel structures of the reconditioned railway wheels are changed to be the same as the steel structures of the original railway wheels, and accordingly, the welding performance can be improved and damage to the reconditioned railway wheels can be prevented.

## Description

### [Technical Field]

The present disclosure relates to a smart welding system for reconditioning railway wheels, and particularly, to a smart welding system for reconditioning railway wheels, which is embodied to perform flawless welding by operating a welding robot by a program, while uniformly maintaining the supply speed of a welding member and the rotation speed of a wheel shaft, and correcting a defect during welding by monitoring various data that are generated during the welding.

### [Background Art]

In general, a wheel of a railway vehicle wears due to friction with a rail, etc. by the operation of the railway vehicle. In this case, the wear state of the wheel does not uniformly occur due to the weight of the vehicle or an element of a curve, and there is a safety issue because a flange portion severely wears, in particular.

If the wheel one-sidedly wears as described above, ride quality is reduced in a vehicle operation and a safety issue is caused. Accordingly, a wheel whose one-sided wear condition exceeds a predetermined range needs to be replaced.

In this case, in order to solve a problem, such as a cost, etc. attributable to the replacement of the wheel, conventionally, a method of testing a one-sided wear wheel and reconditioning a reconditionable wheel in which an internal crack is not present by performing sanding processing on the reconditionable wheel in order to remove a one-sided wear condition has been used. However, in the method of reconditioning a wheel through such sanding, a wheel is sanded and reused in order to restore a wear railway wheel, in particular, a flange. There is a disadvantage in that the lifespan of the wheel is reduced due to a great loss of a base material of a wheel tread because the amount of sanding of the base material is four times a flange restoration thickness upon restoration of the flange. That is, there is a problem in that economics are low.

Accordingly, a method of fostering and welding the flange of a wheel by using a welding member and a welding robot suitable for the fostering of the wheel and reconditioning the wheel by forming a surface hardening layer was used instead of reconditioning the wheel by performing sanding processing on the wheel.

However, the method of reconditioning a wheel through such fostering and welding has a problem in that the characteristics and mechanical properties of a steel structure of a reconditioned railway wheel are greatly changed depending on the quality of the welding member or the supply speed of the welding member. Furthermore, there is a disadvantage in that uniform welding quality cannot be secured because an operation speed, a moving range, etc. of welding are manually controlled by a manual manipulator not a robot.

### [DISCLOSURE]

### [Technical Problem]

The present disclosure has been contrived to solve the technical problems, and an object of the present disclosure is to provide a smart welding system for reconditioning railway wheels and a method of reconditioning a railway wheel using the same, which are embodied to be capable of improving the reliability of welding by operating a welding robot by a program while uniformly maintaining the supply speed of a welding member and the rotation speed of a wheel shaft, big-dating a defect condition during welding by monitoring various data that are generated during welding, and correcting the defect based on deep learning and artificial intelligence.

### [Technical Solution]

In order to accomplish the object, a smart welding system for reconditioning railway wheels according to the present disclosure is a welding system that is used to recondition a wear railway wheel, and includes a wheel shaft on which a railway wheel that needs to be reconditioned is mounted, a driving part that rotates and drives the wheel shaft, a welding robot that performs welding work on the railway wheel mounted on the wheel shaft, a welding member supply part that supplies a welding member to a welding robot, and a monitoring part that monitors and displays a process of the welding work.

### [Advantageous Effects]

According to the smart welding system for reconditioning railway wheels according to the present disclosure, there is an advantage in that uniform welding quality can be secured by correcting a defect during welding by automatically performing welding work by a program and monitoring various data that are generated during the welding.

Furthermore, there are effects in that welding performance can be improved and damage to a reconditioned railway wheel can be prevented by changing the steel structure of the reconditioned railway wheel identically with the steel structure of the existing railway wheel through a change in the composition of a welding member.

### [Description of Drawings]

FIG. 1 is a block diagram schematically illustrating a construction of a smart welding system for reconditioning railway wheels according to the present disclosure.
FIG. 2 is a photo illustrating an appearance of the smart welding system for reconditioning railway wheels according to the present disclosure.
FIG. 3 is a design view schematically illustrating an appearance of the smart welding system for reconditioning railway wheels according to the present disclosure.
FIG. 4 is a photo illustrating a monitoring process of the smart welding system for reconditioning railway wheels according to the present disclosure.

### [Mode for Invention]

The present disclosure may be modified in various ways and may have various embodiments. Specific embodiments are to be illustrated in the drawings and specifically described in the detailed description. However, it should be understood that the present disclosure is not intended to be limited to specific embodiments, but include all of modifications, equivalents and/or substitutions included in the technical spirit and technical scope of the present disclosure.

All terms used herein, including technical or scientific terms, have the same meanings as those commonly understood by a person having ordinary knowledge in the art to which an embodiment pertains, unless defined otherwise in the specification. Terms, such as those commonly used and defined in dictionaries, should be construed as having the same meanings as those in the context of a related technology, and are not construed as having ideal or excessively formal meanings unless explicitly defined otherwise in the specification.

As described above, it is advantageous to use metal having a bainite structure rather than a pearlite structure in a railway wheel. Accordingly, the present disclosure is characterized in that the composition of a welding member is changed and a process of preheat treatment and post heat treatment is changed in order to change a wheel of a railway vehicle having the existing pearlite metal structure into a wheel of a railway vehicle having a bainite metal structure.

Hereinafter, the present disclosure is described in detail with reference to the drawings.

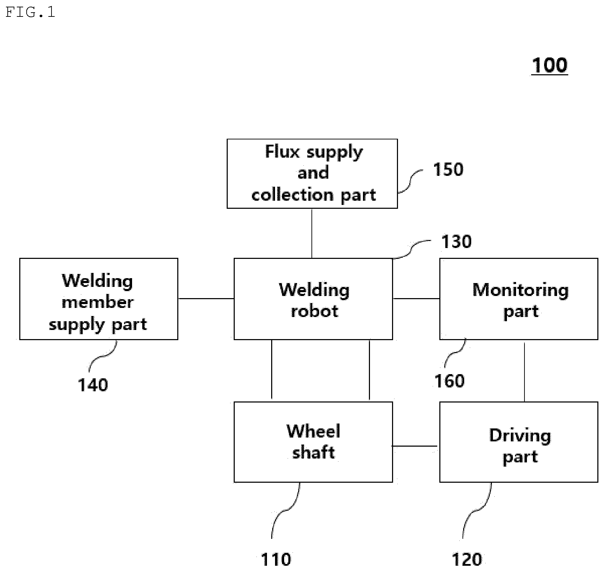

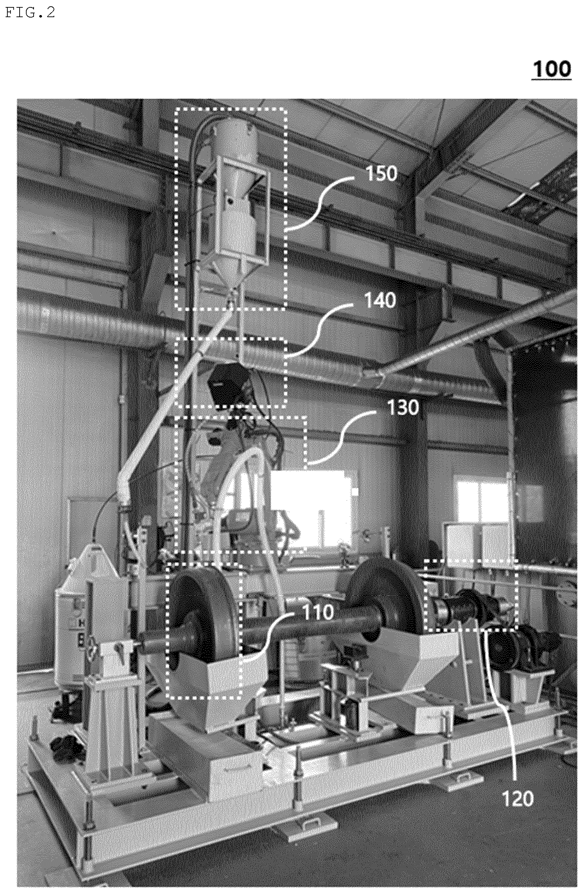

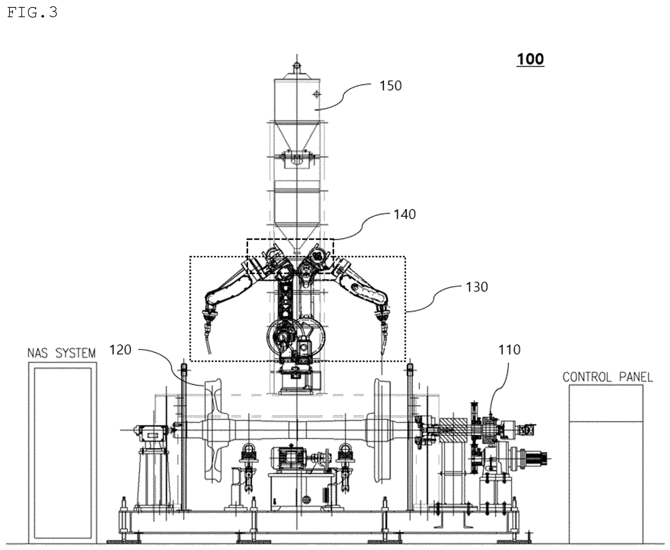

FIG. 1 is a block diagram schematically illustrating a construction of a smart welding system for reconditioning railway wheels according to the present disclosure. FIG. 2 is a photo illustrating an appearance of the smart welding system for reconditioning railway wheels according to the present disclosure. FIG. 3 is a design view schematically illustrating an appearance of the smart welding system for reconditioning railway wheels according to the present disclosure.

Referring to FIGS. 1 to 3, the smart welding system 100 for reconditioning railway wheels according to the present disclosure includes a wheel shaft 110, a driving part 120, a welding robot 130, a welding member supply part 140, a flux supply and collection part 150, and a monitoring part 160.

A railway wheel that needs to be reconditioned is mounted on the wheel shaft 110. When the wheel shaft 110 is placed on the cylinder of the smart welding system 100 for reconditioning railway wheels according to the present disclosure by using a fork lift or an over head crane, the wheel shaft automatically keeps its balance, and the wheel shaft 110 is mounted by a hydraulic chuck and a tailstock.

The driving part 120 rotates and drives the wheel shaft 110 on which a railway wheel that needs to be reconditioned is mounted. A planetary gearbox (not illustrated) may be installed in the driving part 120 in order to rotate the wheel shaft 110 at a predetermined low rotation speed. Furthermore, for stepover, when a driving part encoder is installed and the wheel shaft 110 is rotated once, the driving part outputs a control signal to the welding robot 130.

The welding robot 130 is operated by a preset program, and performs welding work on a railway wheel that is mounted on the wheel shaft 110 and that needs to be reconditioned. The welding robot 130 that receives the control signal output by the driving part 120 performs the welding work as the tip of a welding holder is moved in directions X, Y and Z according to an input program.

Conventionally, a manual manipulator was used to move the welding tip of the welding robot. That is, when a worker input a command through a manual button with respect to movement numerical values of the welding tip, the numerical values may vary depending on a function of the worker. Accordingly, there is a problem in that uniform quality cannot be secured.

In contrast, the smart welding system 100 for reconditioning railway wheels according to the present disclosure inputs moving numerical values in advance by an already set program and operates the welding robot 130 through a touch pendant.

It is possible to secure uniform welding quality because stacking welding having a uniform welding thickness is possible by previously removing a defect element which may occur in a process of a worker manually operating the welding robot through such a process. Furthermore, it is also possible to reduce the number of workers because an operation of the welding robot is automatically performed by a program.

The welding member supply part 140 supplies a welding member to the welding robot 130.

In order to secure uniform welding quality, it is important to supply a welding member at a uniform speed. Accordingly, the smart welding system 100 for reconditioning railway wheels according to the present disclosure includes a welding member supply speed measuring part (not illustrated) under the welding member supply part 140, measures the supply speed of a welding member, and provides corresponding data to the welding robot 130. In this case, the welding robot 130 performs welding work while changing a voltage and a current based on the data of the rotation speed of a wheel and the supply speed of the welding member.

The rotation speed of the wheel and the supply speed of the welding member are determined by the calculation of the amount of a heat input for welding. The amount of the heat input is calculated by Equation 1 below. Amount of heat input = 60 * current (Amp) * voltage (volt)/rotation speed

It is preferred that the amount of the heat input is set to 13 to 17 kilo Joule (kJ) by considering whether a defect occurs in a metal structure, a dilution rate, a cold crack, a hot crack, etc.

The rotation speed of the wheel is determined by considering weldability. It is preferred that the rotation speed of the wheel is 40 to 60 cm/min, more preferably, 44 cm/min.

When the rotation speed of the wheel is smaller than 40 cm/min, the amount of a heat input is increased and a crack occurs in a welding structure. When the rotation speed of the wheel is greater than 60 cm/min, there is a problem in that welding work is not smoothly performed.

It is preferred that the voltage (volt) is 25 to 35 V, more preferably, 30 V.

When the voltage is less than 25 V, the height of welding cannot be increased because the width of welding is increased. When the voltage is greater than 35 V, there is a problem in that the height of welding is unstably increased because the width of welding is reduced.

If the voltage is set in the range of 25 to 35 V, the supply speed of a welding member and a current are automatically determined.

In the present disclosure, the rotation speed of the wheel shaft and a voltage and a current are set to 44 cm/min, 30 V, and 300 A, respectively, so that the amount of a heat input of 13 kJ can be obtained.

Meanwhile, it is common that a railway wheel is basically designed with high carbon, low manganese, and low chromium in order to increase the stability and hardness of a structure in a casting state. Accordingly, a welding member that is used to foster a wear railway wheel by welding the wear railway wheel in an original size may be designed with low carbon, high manganese, and high chromium in order to increase the stability and hardness of a structure.

In order for a welding part to have a composition that is suitable for performing fostering and welding while having properties similar to those of a railway wheel as described above, the welding member may include carbon (C) 0.12 to 0.15 wt%, silicon (Si) 0.3 to 0.6 wt%, manganese (Mn) 1.5 to 2.0 wt%, chromium (Cr) 0.5 to 1.0 wt%, nickel (Ni) 1.5 to 2.0 wt%, molybdenum (Mo) 0.1 to 0.3 wt%, and inevitable impurities and remaining iron.

The welding member may include carbon (C) of 0.12 to 0.15 wt%.

If the welding member includes the amount of carbon smaller than carbon content of the wear railway wheel, there is an advantage in that the injection of carbon into the wear railway wheel during welding can be prevented. If the welding member includes carbon of less than 0.12 wt%, there is a problem in that strength is reduced. If the welding member includes carbon of more than 0.15 wt%, carbon may be injected into the wheel during welding, and there is a problem in that brittleness occurs.

The welding member may include silicon of 0.3 to 0.6 wt%.

If the welding member includes the amount of silicon smaller than silicon content of the wear railway wheel, the workability of welding is increased, and a shape and the size of a bead and the continuity of the beads (a deposition mark that is generated when a base material and a welding rod are melted in welding work and that has a band-shaped long waveform) may become better. If a first welding member includes silicon of less than 0.3 wt%, there is a problem in that hardness is reduced. If the welding member includes silicon of more than 0.6 wt%, there are problems in that workability is low and a shape and the size of a bead and the continuity of the beads are not good.

The welding member may include manganese (Mn) of 1.5 to 2.0 wt%.

If the welding member includes the amount of manganese greater than manganese content of the wear railway wheel, welding may be minutely performed because shapes of beads are dispersed upon welding. If the welding member includes manganese of less than 1.5 wt%, there is a problem in that the welding member does not act as a deoxidizer. If the welding member includes manganese of more than 2.0 wt%, there is a problem in that beads are not dispersed.

The welding member may include chromium (Cr) of 0.5 to 1.0 wt%.

If the welding member includes the amount of chromium greater than chromium content of the wear railway wheel, the strength of a welded wheel may be increased. In this case, high carbon content of the wheel itself increases strength, but the welding member is designed with low carbon. Accordingly, an excessive amount of chromium may be added in order to increase the strength. If the first welding member includes chromium of less than 0.5 wt%, there is a problem in that the strength of a welded wheel is reduced. If the first welding member includes chromium of more than 1.0 wt%, there is a problem in that the strength is reduced.

The welding member may include nickel (Ni) of 1.5 to 2.0 wt%.

The strength and hardness of a welded railway wheel can be improved because the welding member includes nickel.

The welding member may include molybdenum (Mo) of 0.1 to 0.3 wt%.

Molybdenum (Mo) reduces a critical cooling speed for generating a bainite structure and contributes to precipitation hardening. If the welding member includes molybdenum (Mo) of less than 0.1 wt%, there is a problem in that wear resistance at a high temperature is not sufficient when a temperature instantly approaches 3000°C upon welding. If the welding member includes molybdenum of more than 0.3 wt%, there is a problem in that a cost rises due to a high price of molybdenum.

The welding member may additionally include inevitable impurities. In this case, the inevitable impurities included in the welding member may include copper (Cu) 0.02 to 0.05 wt%, titanium (Ti) 0.01 to 0.05wt%, vanadium (V) 0.03 to 0.06 wt%, phosphor (P) 0.005 to 0.02 wt%, sulfur (S) 0.005 to 0.01 wt%, and boron (B) 0.0005 to 0.0015 wt%.

The welding member may include titanium (Ti) of 0.01 to 0.05 wt%.

Titanium (Ti) contributes to precipitation hardening and functions to refine a particle size. If titanium (Ti) of less than 0.01 wt% is included, the precipitation hardening and particle size refining effects are not great. If titanium (Ti) of more than 0.05 wt% is included, the precipitation hardening effect is not great, and there is a problem in that a cost rises due to a high price of titanium (Ti).

The welding member may include vanadium (V) of 0.03 to 0.06 wt%.

Vanadium (V) is a component that is added to a rolled steel product in order to contribute to precipitation hardening. If vanadium (V) of less than 0.03 wt% is included, a strength increase effect cannot be obtained. If vanadium (V) of more than 0.06 wt% is included, the precipitation hardening effect is not great, and there is a problem in that a cost rises due to a high price of vanadium (V).

Phosphor (P), sulfur (S), and boron (B) are impurities included the raw material of the welding member. An upper limit of each of the impurities needs to be managed because there is a concern of occurring a weldability failure and a deposition failure if the upper limit is high.

By changing the composition of the welding member as described above, a fostered and welded part also has characteristics similar to those of the steel structure of the existing railway wheel. Additionally, there is an advantage in that damage to a railway vehicle wheel can be prevented.

In the smart welding system 100 for reconditioning railway wheels according to the present disclosure, welding work may be performed according to submerged arc welding (SAW). The submerged arc welding is a method of performing welding by thickly covering a welding portion with a flux, that is, a coating material that has a refining action and that has a particle shape, and generating arc having a high current between a welding rod and a material that is welded along a welding line within the welded portion.

In this case, the flux blocks oxygen in the air and is changed into slag while coming into contact with arc on a welding surface. The flux that is changed into slag as described above is discarded, and the remainder is collected and reused.

Accordingly, the smart welding system 100 for reconditioning railway wheels according to the present disclosure includes the flux supply and collection part 150 so that flux supply means and flux collection means are circulated by one fan in order to reduce flux consumption.

The monitoring part 160 displays various data generating during welding on a monitoring screen by continuously monitoring a welding process, and stores corresponding data in a storage part. A reduction of quality attributable to a welding defect can be prevented by finding a defect during welding by using the stored data and correcting the defect subsequently.

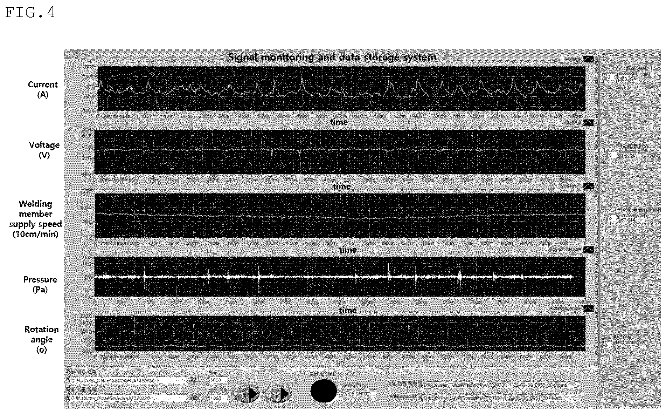

As illustrated in FIG. 4, a current (amp), a voltage (V), a welding member supply speed (WFS), pressure (Pascal), and a rotation angle of the wheel shaft in a welding process may be displayed on a monitoring screen.

Furthermore, the monitoring part may generate alarm by determining that a defect has occurred in a welding process when various data generated during welding fall outside a reference value of data stored in the storage part.

Meanwhile, various data stored in the monitoring part may be stored in a network attached storage (NAS) cloud as big data, and may be used through deep learning by artificial intelligence (AI).

As described above, according to the smart welding system for reconditioning railway wheels according to the present disclosure, the metal structure of a reconditioned wheel can be changed by changing the composition of a welding member. Accordingly, there is an effect in that an initial wear time of a reconditioned railway wheel can be deferred. There is an advantage in that uniform welding quality can be secured by automatically performing welding work by a program and correcting a defect during welding by monitoring various data that are generated during the welding.

## Claims

1. A welding system that is used to recondition a wear railway wheel, the welding system comprising:
a wheel shaft on which a railway wheel that needs to be reconditioned is mounted;
a driving part that rotates and drives the wheel shaft;
a welding robot that performs welding work on the railway wheel mounted on the wheel shaft;
a welding member supply part that supplies a welding member to a welding robot;
a monitoring part that monitors and displays a process of the welding work; and
a controller that controls an operation of the welding system.

2. The smart welding system of claim 1, wherein the welding member comprises carbon (C) 0.12 to 0.15 wt%, silicon (Si) 0.3 to 0.6 wt%, manganese (Mn) 1.5 to 2.0 wt%, chromium (Cr) 0.5 to 1.0 wt%, nickel (Ni) 0.4 to 0.6 wt%, molybdenum (Mo) 0.1 to 0.3 wt%, copper (Cu) 0.02 to 0.05 wt%, inevitable impurities, and remaining iron.

3. The smart welding system of claim 2, wherein the welding member further comprises titanium (Ti) 0.01 to 0.05wt%, vanadium (V) 0.03 to 0.06 wt%, phosphor (P) 0.005 to 0.02 wt%, sulfur (S) 0.005 to 0.01 wt%, and boron (B) 0.0005 to 0.0015 wt%.

4. The smart welding system of claim 1, wherein the driving part further comprises a wheel shaft rotation speed adjustment part that measures and adjusts a rotation speed of the wheel shaft and provides the welding robot with data relating a rotation of the wheel shaft.

5. The smart welding system of claim 1, wherein the welding robot is controlled by the controller and automatically operated by a preset program.

6. The smart welding system of claim 1, wherein the welding member supply part further comprises a welding member supply speed measuring part that measures a supply speed of the welding member supplied to the welding robot and provides corresponding data to the welding robot.

7. The smart welding system of claim 6, wherein the welding robot performs welding work by automatically adjusting a voltage and a current based on data relating to the supply speed of the welding member provided by the welding member supply speed measuring part.

8. The smart welding system of claim 1, wherein the monitoring part displays various data generated in a welding process on a monitoring screen by monitoring the welding process, and stores corresponding data in a storage part.

9. The smart welding system of claim 8, wherein the data generated in the welding process are data relating to a current (amp), a voltage (V), a welding member supply speed (WFS), pressure, (Pascal), and a rotation angle of the wheel shaft in the welding process.

10. The smart welding system of claim 9, wherein the data generated in the welding process are stored as big data and used to find a defect in the welding process through deep learning training by artificial intelligence (AI).

11. The smart welding system of claim 1, further comprising a flux supply and collection part that supplies a flux to a welding portion and collects a remaining flux, wherein the supply and collection of the flux are circulated by one fan.
